# EUROPÄISCHE PATENTSCHRIFT

(11) **EP 0 815 721 B1**
(45) Veröffentlichungstag und Bekanntmachung des Hinweises auf die Patenterteilung: **16.08.2001**
(21) Anmeldenummer: 97107966.0
(22) Anmeldetag: 15.05.1997
(51) Int. Cl.: A01F 15/14

(54) **Rundballenpresse**
Roundbaler
Presse à balles rondes

(30) Priorität: 01.07.1996 DE 29611445 U
(43) Veröffentlichungstag der Anmeldung: 07.01.1998
(73) Patentinhaber: Kverneland Gottmadingen GmbH & Co. KG, 78244 Gottmadingen (DE)
(72) Erfinder: Maier, Martin, 78244 Gottmadingen (DE); Wölfle, Hans Peter, 78244 Gottmadingen (DE)
(74) Vertreter: Grünecker, Kinkeldey, Stockmair & Schwanhäusser Anwaltssozietät

(56) Entgegenhaltungen:
- EP-A- 0 071 687
- FR-A- 2 633 488

## Beschreibung

Die Erfindung betrifft eine Rundballenpresse gemäß dem Oberbegriff des Patentanspruchs 1.

Bei einer aus EP-A-0 217 714 bekannten Rundballenpresse sind die Garnschlitten an längsverschiebbaren Zahnstangen angeordnet, die mittels eines mit beiden Zahnstangen kämmenden, angetriebenen Ritzels linear und gegensinnig hin- und herbewegt werden. Parallel zu den Zahnstangen sind im Rahmen stationäre Zahnstangen angeordnet. Jeder Garnschlitten trägt ein drehbar gelagertes Ritzel, das in eine stationäre Zahnstange eingreift und nur die lineare Bewegung des Garnschlittens in eine Drehbewegung übersetzt, mit der die Liefervorrichtung zum Abspulen des Garns angetrieben wird. Das Garn ist durch die Zuführöffnung zur Preßkammer zwischen die benachbarte Preßwalze und den Rundballen einzuführen, damit der Rundballen das Garn mitnimmt und bei der weiteren Bewegung jedes Garnschlittens in sich dann überkreuzende Garnwindungen eingebunden wird. Das zunächst frei oberhalb der Zuführöffnung gehaltene Garn sollte deshalb möglichst rasch dem Rundballen zugeführt werden, damit ein großer Teil des Hubes des Garnschlittens zum kreuzweisen Binden nutzbar ist, und damit die ordnungsgemäße Umwicklung des Rundballens an einer genau vorherbestimmbaren Position beginnt. Mit einem nur kleinen Hubweg des Garnschlittens aus seiner Ausgangsstellung sollte deshalb eine große Garnlänge abgespult werden. Da bei der bekannten Rundballenpresse zum anfänglichen Zuführen des Garns die Bewegung nur des Garnschlittens im Rahmen für die Lieferung nutzbar ist, der die Liefervorrichtung verfährt, wird ein relativ großer Hubweg des Garnschlittens bis zum ordnungsgemäßen Mitnehmen des Garns durch den Rundballen verbraucht und läßt sich die Position des Garnschlittens, ab der das Garn ordnungsgemäß vom Rundballen mitgenommen wird, nicht mit ausreichender Sicherheit und wiederholbar vorherbestimmen. Deshalb wird z.B. eine zusätzliche Garnlänge sicherheitshalber ausgegeben und/oder wird der Garnschlitten weiter verfahren als nötig. Dies führt zu einer in vielen Fällen unnötigen Vergeudung von Garn und kann das spätere Auflösen des Rundballens erschweren.

Weiterer Stand der Technik ist enthalten in FR-A-2 633 488 (Walzenliefervorrichtung mit stationärer Antriebswelle) und EP-A-0 071 687 (Liefervorrichtung mit Stufengetriebe für mehrere Liefergeschwindigkeiten).

Der Erfindung liegt die Aufgabe zugrunde, eine Rundballenpresse der eingangs genannten Art zu schaffen, bei der eine effektivere Kreuzbindung des Rundballens mit exakt wiederholbarer und vorherbestimmbarer Position des Garnschlittens ermöglicht werden, an der der Rundballen das Garn selbsttätig mitnimmt.

Die gestellte Aufgabe wird erfindungsgemäß mit den Merkmalen des Patentanspruchs 1 gelöst.

Bei dieser Ausbildung wird jede Liefervorrichtung mit einer Geschwindigkeit angetrieben, die auf der doppelten linearen Bewegungsgeschwindigkeit des zugehörigen Garnschlittens beruht, und, so weit dies aus baulichen Gründen und mit noch zulässigem Wirkungsgrad möglich ist, sogar noch ins Schnellere übersetzt werden kann. Es ist für das Garn somit die relative lineare Geschwindigkeit beider Garnschlitten nutzbar, d.h. die doppelte lineare Bewegungsgeschwindigkeit jedes der Garnschlitten. Dadurch wird das Garn bereits mit einem relativ kleinen Hub des Garnschlittens sehr schnell zwischen die Preßwalze und den Rundballen eingeführt und frühzeitig vom Rundballen ordnungsgemäß mitgenommen. Ferner ist aufgrund der beschleunigten Zuführung des Garns mit einem kleinen Hubweg des Garnschlittens die Position des Garnschlittens zuverlässig vorherbestimmbar, bei der die ordnungsgemäße Kreuzbindung des Rundballens beginnt, und braucht zur Sicherheit keine überschüssige Garnlänge vergeudet zu werden. Der Bindevorgang und somit die jeweilige Stillstandszeit der Rundballenpresse auf dem Feld werden verkürzt. Die Kreuzbindung ist effektiv und von gleichbleibend guter Qualität.

Baulich einfach läßt sich gemäß Anspruch 2 eine Gelenkkette oder ein Zahnriemen, den baulichen Gegebenheiten bzw. Platzbeschränkungen angepaßt, einfach antreiben und umlenken. Für die Zahnstangen, deren jede einen Garnschlitten bewegt und gleichzeitig die Liefervorrichtung des anderen Garnschlittens treibt, ist in Bewegungsrichtung ausreichend Platz vorzusehen. Ein langgestrecktes Reibelement als Antriebselement könnte starr oder flexibel und damit umlenkbar sein, wobei die Liefervorrichtung dann über ein Reibrad getrieben wird. Das Abtriebselement greift form- und/oder kraftschlüssig am Antriebselement an und wandelt dessen lineare Bewegung in eine Drehbewegung um, die auf die Liefervorrichtung übertragen wird. Dabei läßt sich die abgeleitete Geschwindigkeit einfach ins Schnelle übersetzen, um eine noch höhere Abspulgeschwindigkeit für das Garn zu erreichen.

Gemäß Anspruch 3 bildet die Gelenkkette oder der Zahnriemen eine einendig offene oder endlose Schlaufe bildet, die auf engem Raum umgelenkt und hin- und herbewegt wird. Da die beiden Trume in der Schlaufe miteinander verbunden sind, entstehen exakt synchrone gegensinnige Bewegungen der Garnschlitten, wobei nur ein einziger Antrieb benötigt wird.

Gemäß Anspruch 4 dienen Umlenkrollen für die Steuerung der Schlaufenbewegung. Durch die Federvorspannung ist in den Ketten- oder Riementrieb bewußt eine Elastizität integriert, die lange Standzeiten und einen wartungsarmen Betrieb gewährleistet.

Herstellungstechnisch und montagetechnisch zweckmäßig kann gemäß Anspruch 5 das Ritzel als Verschleißteil auf der Welle sitzen. Der Freilauf ist so ausgelegt, daß er die Liefervorrichtung jeweils so lange mit dem Ritzel kuppelt, bis der

Rundballen das Garn mit höherer Abspulgeschwindigkeit abzieht, als das Ritzel die Lieferrollen zu treiben vermag. Dann läuft der Freilauf frei durch. Der Freilauf verhindert ferner das unerwünschte Zurückziehen des Garns nach dem Abschneiden.

Gemäß Anspruch 6 wird durch die Wahl des Teilkreisdurchmessers des Ritzels eine Übersetzung der abgegriffenen Geschwindigkeit ins Schnelle bewirkt.

Gemäß Anspruch 7 wird bei einer Störung ggfs. der Mitnehmerbolzen oder die Hülse abgeschert, so daß weder das Ritzel noch die Welle beschädigt werden. Außerdem läßt sich das Ritzel einfach austauschen.

Gemäß Anspruch 8 wird der Eingriff zwischen der Gelenkkette bzw. dem Zahnriemen und dem Ritzel zwangsgesichert.

Gemäß Anspruch 9 ergibt sich eine leichtgängige Beweglichkeit der stabil geführten Garnschlitten mit geringem Wartungsbedarf.

Die Verbindung des Garnschlittens mit dem Antriebselement ist gemäß Anspruch 10 einfach. Bei einer Störung kann der Stift abgeschert werden, ohne das Antriebselement oder den Garnschlitten zu beschädigen. Außerdem kann eine handelsübliche Gelenkkette mit Hohlbolzen oder Gelenkbolzen benutzt werden, wobei in letzterem Fall ein Gelenkbolzen durch den Kupplungsstift ersetzt wird.

Gemäß Anspruch 11 wird durch die Position jeder Klinge vorbestimmt, wann das Garn abgeschnitten wird.

Die Garnumlenkrolle gemäß Anspruch 15 führt das zulaufende Garn und leitet es entlang eines vorbestimmten Laufweges in die Liefervorrichtung.

Gemäß Anspruch 13 wird durch die nachgiebige Anpressung der mitlaufenden Lieferrolle eine vorbestimmte Mitnahmekraft für das Garn erzeugt und werden Unregelmäßigkeiten im Garn "geschluckt".

Mit Hilfe der Garnleitöse gemäß Anspruch 14 bewegt sich das zugeführte Garn in einem exakt vorbestimmten Weg in die Zuführöffnung.

Anhand der Zeichnung wird eine Ausführungsform des Erfindungsgegenstandes erläutert. Es zeigen:
- Fig. 1: einen Teil eines Radialschnitts durch eine Rundballenpresse,
- Fig. 2: die Bindevorrichtung der Rundballenpresse von Fig. 1 in einer Ansicht in Richtung eines Pfeiles II in Fig. 1, und
- Fig. 3: einen Querschnitt durch die Bindevorrichtung von Fig. 2 in einer Stellung, in der sich die beiden Garnschlitten überdecken.

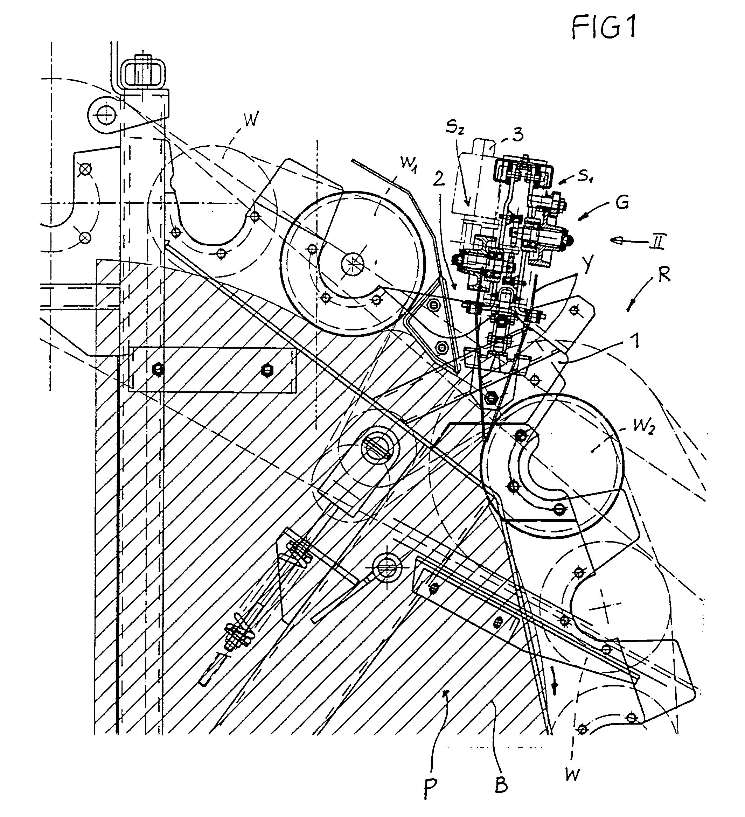

Eine Rundballenpresse R, von der in Fig. 1 nur ein Ausschnitt in einem Radialschnitt gezeigt ist, dient zum Herstellen in Garn eingebundener Rundballen B aus Erntegut. In einem Gehäuse 1 der Rundballenpresse R wird eine im wesentlichen zylindrische Ballenpreßkammer P durch eine Vielzahl in Umfangsrichtung parallel zueinander verteilter, angetriebener Preßwalzen W, W1, W2 begrenzt. Das aufgenommene Erntegut wird in die Ballenpreßkammer P eingeführt und durch die in gleichem Drehsinn (in Fig. 1 im Uhrzeigesinn) laufenden Preßwalzen gewickelt und verdichtet, bis ein Rundballen B einer vorbestimmten Größe und Dichte entstanden ist. Dabei fährt die Rundballenpresse zum Aufsammeln des Ernteguts über das Feld. Ist die vorbestimmte Ballengröße bzw. -dichte erreicht, wird angehalten, und bei weiterhin rotierendem Rundballen B ein Bindevorgang eingeleitet, um den Rundballen B umfangsseitig mit sich überkreuzenden Windungen eines Garns Y (im vorliegenden Fall mit zwei Garnen Y) zu umspannen. Ist der Bindevorgang abgeschlossen, dann werden die Garne Y abgeschnitten, eine Klappe der Ballenpreßkammer P geöffnet und der fertige Rundballen B ausgeworfen. Zum Durchführen des Bindevorgangs ist eine Bindevorrichtung G auf dem Gehäuse 1 angeordnet.

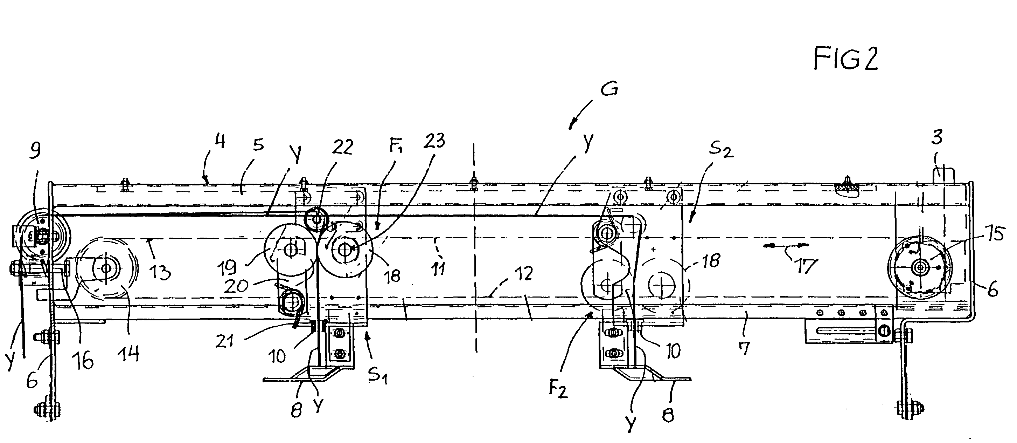

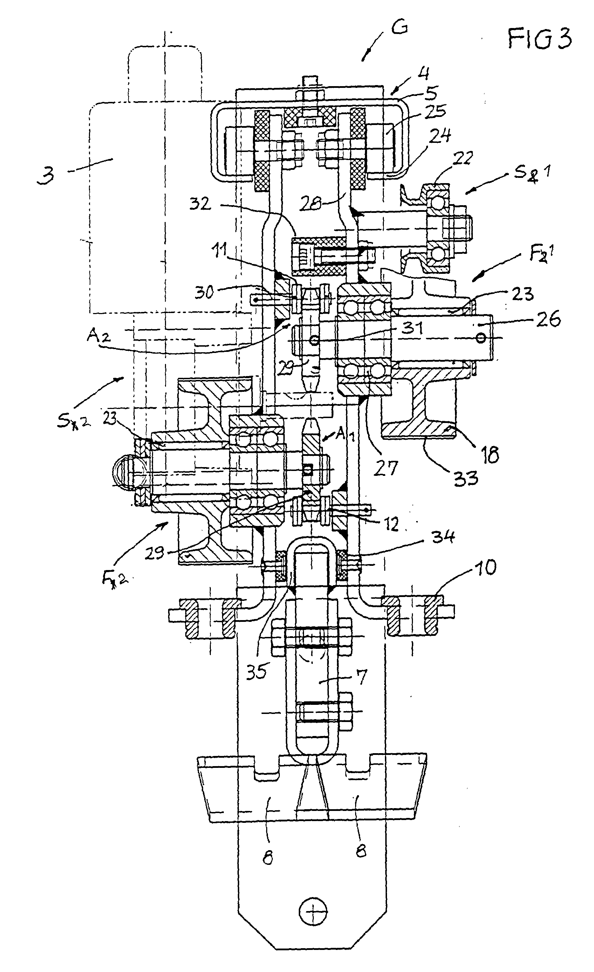

Die Bindevorrichtung G befindet sich im Bereich einer Zuführöffnung 2 zwischen Preßwalzen W1 und W2 und weist zwei Garnschlitten S1, S2 auf, die (Fig. 2 und 3) mittels eines Antriebs 3 zu einer synchronen gegensinnnigen Bewegung angetrieben werden und die zunächst frei in die Zuführöffnung 2 hängenden Garne Y abspulen und dem Umfang des Rundballens B zuführen, bis dieser die Garne unter Vermittlung der Preßwalzen mitnimmt und sich bei weiterer Drehbewegung selbsttätig in die dabei wie üblich gebremsten Garne Y einbindet. Es verfahren die Garnschlitten S1, S2 so, daß sich überkreuzende Garnwindungen entstehen.

In Fig. 2 und 3 weist die Bindevorrichtung G einen quer und in etwa parallel zur Achse der Ballenpreßkammer P liegenden Rahmen 4 mit oberen Rahmenholmen 5, seitlichen Rahmenholmen 6 und unteren Rahmenholmen 7 auf, in dem die beiden Garnschlitten S1, S2 über die Breite der Zuführöffnung 2 verfahrbar sind. Der Antrieb 3 ist in den Rahmen 4 integriert. Am unteren Rahmenholm 7 sind zwei Garnschneidklingen 8 positioniert, die jeweils ein Garn Y nach Beendigung des Bindevorgangs abschneiden. Am dem Antrieb 3 gegenüberliegenden Rahmenende ist eine Umlenkvorrichtung 9 für die von einem nicht dargestellten Garnspeicher zulaufenden Garne Y gelagert, die von der Umlenkvorrichtung 9 zu jeweils einem Umlenkelement 22, vorzugsweise einer Rolle, an jedem Garnschlitten S1, S2, von diesem durch eine Garnliefervorrichtung F1 bzw. F2 und danach durch eine am Garnschlitten S1, S2 angebrachte Garnleitöse 10 geführt werden.

Im Rahmen 4 sind parallel zur Bewegungsrichtung der Garnschlitten S1, S2 zwei langgestreckte Antriebselement 11, 12 für die Garnschlitten S1, S2 zu einer hinund hergehenden Bewegung (Doppelpfeil 17) antreibbar, wobei die beiden Antriebselemente 11, 12 bei der gezeigten Ausführungsform die beiden Trume einer einendig offenen oder unendlichen Schlaufe einer Gelenkkette 13 sind, die in einem Rahmenende eine Umlenkrolle 14 umschlingt und am anderen Rahmenende auf einer Antriebsumlenkrolle 15 verankert ist. Die Umlenkrolle 14 wird durch einen Kettenspanner 16 federnd vorgespannt.

Jede Liefervorrichtung F1, F2 besteht aus einer drehantreibbaren Lieferrolle 18 und einer mitlaufenden, in etwa gleich großen Lieferrolle 19 auf einem Schwenkarm 20 des Garnschlittens S1, S2, wobei der Schwenkarm 20 durch eine Feder 21 vorgespannt ist, um die mitlaufende Lieferrolle 19 an die antreibbare Lieferrolle 18 anzupressen. Die Lieferrolle 18 wird über einen in Lieferrichtung sperrenden Freilauf 23 angetrieben, und zwar (Fig. 3) durch ein Ritzel 29, das durch das Antriebselement 11 oder 12 des jeweils anderen Garnschlittens S2 oder S1 zur Drehung angetrieben wird. Der Freilauf 23 sperrt bei stehendem Ritzel 29 in Rückzugsrichtung des Garns Y.

In Fig. 3 sind im oberen Rahmenholm 5 zwei Laufbahnen 24 für Laufrollen oder Gleitelemente 25 vorgesehen, die an bügelartigen Tragkörpern 28 der beiden Garnschlitten S1, S2 drehbar gelagert sind. Die unteren Enden der Tragkörper 28 stützen sich mittels Gleitern 34 an Gleitbahnen 35 des unteren Rahmenholms 7 seitlich ab.

Jedes Ritzel 29 sitzt auf einer Welle 26 und ist mit dieser durch einen Mitnehmerstift oder eine Hülse 31 gekuppelt. Die Welle 26 trägt die angetriebene Lieferrolle 18 und ist in Wälzlagern 27 im Tragkörper 28 drehbar gelagert. Jeder Garnschlitten S1, S2 ist über einen oder mehrere Kupplungsstifte 30 mit einem Antriebselement 11 (einem Trum der Gelenkkette 13) gekuppelt. Die Ritzel 29 bilden Abtriebselemente A1, A2, die die doppelte Bewegungsgeschwindigkeit jedes Garnschlittens S1, S2 vom jeweiligen Antriebselement 11 bzw. 12 abgreifen, in eine Drehbewegung umwandeln und mit dieser Drehbewegung die Lieferrolle 18 treiben. Da der Teilkreisdurchmesser der Ritzel 29 kleiner ist als der Außendurchmesser der Lieferrollen 18, wird die abgegriffene und umgewandelte Drehgeschwindigkeit mehrmals ins Schnelle übersetzt. Oberhalb des Eingriffsbereichs des Ritzels 29 der Liefervorrichtung F2 ist eine Aushebesperre 32 am Tragkörper 28 vorgesehen. Der untere Rahmenholm 7 bildet mit seinen Gleitbahnen 35 eine Aushebesperre im Eingriffsbereich des unteren Ritzels 29. Die Garnschlitten S1, S2 und ihre Ritzel 29 sind so im Rahmen 4 angeordnet, daß sie sich aneinander vorbeibewegen können.

Am Beginn eines Bindevorgangs (Fig. 2) fährt der in Fig. 2 linke Garnschlitten S1 nach rechts, während sich der rechte Garnschlitten S2 synchron nach links bewegt. Diese Bewegung wird vom Antrieb 3 eingesteuert. Da das Ritzel 29 des linken Garnschlittens S1, der mit dem Antriebselement 12 verbunden ist, am Antriebselement 11 des rechten Garnschlittens S2 angreift, wird die Summe der Bewegungsgeschwindigkeiten beider Garnschlitten S1, S2 abgegriffen und die Umfangsgeschwindigkeit des Ritzels 29 durch die größere Lieferrolle 18 ins Schnelle übersetzt. Das Garn Y wird sehr rasch abgespult und durch die Leitöse 10 in die Zuführöffnung 2 eingeführt. Bereits nach einem sehr kurzen Hubweg des linken Garnschlittens S1 wird das eingeführte Garn Y vom Rundballen R mitgenommen, wobei der Freilauf 23 die dann notwendige Drehgeschwindigkeit der Lieferrollen 18, 19 ermöglicht. Das gleiche geschieht beim rechten Garnschlitten S2 mit der Liefervorrichtung F2 und dem von dieser zugeführten Garn Y. Die gegensinnigen Bewegungen der Garnschlitten S1, S2 werden nach Übernahme der Garne durch den Rundballen B fortgesetzt, wobei die Garnschlitten S1 und S2 aneinander vorbeifahren, bis der rechte Garnschlitten S2 beim linken Rahmenende und der linke Garnschlitten S1 beim rechten Rahmenende anlangt. Dann wird die Bewegung der Gelenkkettenschlaufe 13 umgekehrt und werden die beiden Garnschlitten S1, S2 wieder in Richtung auf ihre Ausgangspositionen verfahren. Dabei entstehen auf dem Umfang des Rundballens B einander überkreuzende Garnwindungen. Die Bewegung der Garnschlitten S1, S2 wird fortgesetzt, bis schließlich jeder Garnschlitten S1, S2 die Position der ihm zugeordneten Abschneideklinge 8 erreicht, an der das Garn abgeschnitten wird. Die Garnschlitten S1, S2 fahren dann wieder in ihre Ausgangspositionen. Der Bindevorgang ist dann abgeschlossen. Der eingebunden Rundballen B kann ausgeworfen werden. Die Bindevorrichtung G steht für den nächsten Bindevorgang bereit.

Anstelle einer Gelenkkettenschlaufe 13 könnte auch ein Zahnriemen verwendet werden. Ferner ist es denkbar, starre Antriebselement 11, 12 in Form von Zahnstangen vorzusehen. Möglich ist auch die Verwendung von als Reibelemente dienenden Antriebselementen, deren Bewegungen nicht über die Ritzel 29, sondern über Reibräder abgegriffen werden. Eine weitere Möglichkeit besteht darin, die Schlaufe 13 in nur einer Bewegungsrichtung anzutreiben und jeden Garnschlitten am Umkehrpunkt von einem Trum abzukuppeln und an das Trum für die andere Bewegungsrichtung wieder anzukuppeln. Dann könnten zum Antreiben der Liefervorrichtung zwei gleichzeitig in beide Trume eingreifende und jeweils mit der Lieferrolle 18 gekuppelte Ritzel vorgesehen sein. Gegebenenfalls wäre dann die Gelenkkette als Doppelkette auszubilden, um das gegenseitige Passieren der Ritzel zuzulassen. Bei der gezeigten Ausführungsform ist nur ein Paar aus zwei Garnschlitten S1, S2 vorgesehen. Es ist jedoch möglich, mit nur einem einzigen Garnschlitten zu arbeiten oder mit mehr als zwei Garnschlitten. Bei nur einem Garnschlitten würde das Abtriebselement A1 oder A2 die Summe der Bewegungsgeschwindigkeiten der beiden Trume abgreifen.

## Patentansprüche

1. Rundballenpresse (R) für Erntegut, mit einem eine Ballenpreßkammer (P) enthaltenden Gehäuse (1), und mit einer am Gehäuse (1) im Bereich einer Garnzuführöffnung (2) zur Preßkammer (P) angeordneten Bindevorrichtung (G), die einen Rahmen (4) aufweist, in dem zwei Garnschlitten (S1, S2) zu einer gleichzeitigen gegenläufigen linearen Bewegung hin- und herverfahrbar angeordnet sind, wobei jeder Garnschlitten (S1, S2) mit einem in Schlitten-Fahrtrichtung angetriebenen Antriebselement (11, 12) einer Antriebseinheit verbunden ist und eine Garnliefervorrichtung (F1, F2) aufweist, deren rotierende Lieferbewegung mechanisch aus der linearen Garnschlittenbewegung abgeleitet ist, **dadurch gekennzeichnet,** daß die Lieferbewegung der Liefervorrichtung (F1, F2) aus der Summe der relativen linearen und gegensinnigen Bewegungen des die Liefervorrichtung (F1, F2) tragenden Garnschlittens (S1, S2) und zusätzlich auch des jeweils anderen Garnschlittens (S2 oder S1) in dem Rahmen (4) abgeleitet ist und daß das Antriebselement (11 oder 12) des einen Garnschlittens (S1 oder S2) mit der Liefervorrichtung (F1 oder F2) des anderen Garnschlittens bewegungsübertragend gekoppelt ist und diese Liefervorrichtung (F1 oder F2) mit der Summe der linearen Bewegungen bzw. Bewegungsgeschwindigkeiten der beiden Garnschlitten (S1, S2) relativ zum Rahmen (4) treibt.

2. Rundballenpresse nach Anspruch 1, **dadurch gekennzeichnet,** daß das Antriebselement (11, 12) jedes Garnschlittens (S1, S2) eine im Rahmen (4) in Bewegungsrichtung des zugehörigen Garnschlittens mittels der Antriebseinrichtung (3, 14, 15) bewegbar angeordnete Gelenkkette, ein Zahnriemen, eine Zahnstange oder ein langgestrecktes Reibelement ist, und daß die Liefervorrichtung (F2, F1) des jeweils anderen Garnschlittens (S2 oder S1) ein form-und/oder kraftschlüssig am Antriebselement (11 oder 12) des einen Garnschlittens (S1 oder S2) angreifendes, drehbares Abtriebselement (A1, A2) aufweist.

3. Rundballenpresse nach Anspruch 2, **dadurch gekennzeichnet,** daß das Antriebselement (11, 12) eine Gelenkkette oder ein Zahnriemen ist, die bzw. der eine einendig offene oder eine endlose Schlaufe mit zwei im wesentlichen parallelen gegensinnig bewegbaren Trumen bildet, und daß mit jedem ein Antriebselement (11, 12) bildenden Trum einer der Garnschlitten (S1, S2) verbunden ist.

4. Rundballenpresse nach Anspruch 3, **dadurch gekennzeichnet,** daß die Gelenkketten- oder Zahnriemenschlaufe (13) auf zwei in Endbereichen des Rahmens (4) angeordneten Umlenkrollen (14, 15) umgelenkt wird, von denen zumindest eine abwechselnd in der einen oder in der anderen Drehrichtung antreibbar ist, und daß vorzugsweise, eine der Umlenkrollen federvorgespannt ist.

5. Rundballenpresse nach Anspruch 2, **dadurch gekennzeichnet,** daß das Abtriebselement (A1, A2) ein im Garnschlitten (S1, S2) drehbar gelagertes Ritzel (29) ist, das über eine Welle (26) und einen Freilauf (23) zumindest mit einer Lieferrolle (18) eines Lieferrollenpaares (18, 19) der Liefervorrichtung (F1 oder F2) kuppelbar ist und daß der Freilauf (23) jeweils in zur Garnlieferrichtung entgegengesetzten Rückziehrichtung des Garns sperrt.

6. Rundballenpresse nach Anspruch 5, **dadurch gekennzeichnet,** daß der Teilkreisdurchmesser des Ritzels (29) kleiner ist als die Außendurchmesser der Lieferrollen (18, 19).

7. Rundballenpresse nach Anspruch 5, **dadurch gekennzeichnet,** daß das Ritzel (29) austauschbar über einen Mitnehmerbolzen oder eine -hülse auf der Welle (26) gehaltert ist.

8. Rundballenpresse nach Anspruch 5, **dadurch gekennzeichnet,** daß am Garnschlitten (S1, S2) an der dem Eingriffsbereich des Ritzels (29) gegenüberliegenden Seite der Gelenkkette bzw. des Zahnriemens eine Aushebesperre (32, 35) angeordnet ist.

9. Rundballenpresse nach Anspruch 1, **dadurch gekennzeichnet,** daß im Rahmen (4) in einem oberen Rahmenholm (5) zwei benachbarte Laufbahnen (24) für abgehängte Laufrollen oder Gleitelemente(25) der Garnschlitten (S1) vorgesehen sind, und daß der untere Rahmenholm (7) außenseitige Gleitbahnen (35) für an den Garnschlitten (S1, S2) angeordnete Gleiter (34) aufweist.

10. Rundballenpresse nach wenigstens einem der Ansprüche 1 bis 9, **dadurch gekennzeichnet,** daß der Garnschlitten (S1, S2) über wenigstens einen in einem Gelenk der Gelenkkette angeordneten Kupplungsstift (30) mit der Gelenkkette (13) verbunden ist.

11. Rundballenpresse nach Anspruch 1, **dadurch gekennzeichnet,** daß am unteren Rahmenholm (7) stationäre Garnschneidklingen (8), vorzugsweise längsverstellbar, angebracht sind.

12. Rundballenpresse nach Anspruch 1, **dadurch gekennzeichnet,** daß am Garnschlitten (S1, S2) benachbart zur Liefervorrichtung (F1, F2) ein Garnumlenkelement (22), vorzugsweise eine Rolle, angeordnet ist.

13. Rundballenpresse nach Anspruch 5, **dadurch gekennzeichnet,** daß die frei mitlaufende Lieferrolle (19) an einem Schwenkarm (20) des Garnschlittens (S1, S2) angeordnet und durch eine Feder (21) gegen die jeweils in Garnlieferrichtung getriebene Lieferrolle (18) angedrückt ist.

14. Rundballenpresse nach Anspruch 5, **dadurch gekennzeichnet**, daß am Garnschlitten (S1, S2) unterhalb der Liefervorrichtung (F1, F2) und in etwa auf der Höhe des unteren Rahmenholms (7) eine Garnleitöse (10) vorgesehen ist.

## Claims

1. Roll baler (R) for harvested material, comprising a housing (1), which includes a bale pressing chamber (P), and a binding apparatus (G), which is disposed on the housing (1) in the region of a twine supply aperture (2) leading to the pressing chamber (P) and has a frame (4), in which are disposed two twine carriages (S1, S2) which are reciprocatable relative to a simultaneous, oppositely directed linear movement, each twine carriage (S1, S2) being connected to a driving element (11, 12) of a driving unit, which element is driven in the direction of travel of the carriage, and having a twine feeding apparatus (F1, F2), the rotary feeding movement of said apparatus being derived mechanically from the linear twine carriage movement, characterised in that the feeding movement of the feeding apparatus (F1, F2) is derived from the sum of the relative linear and oppositely directed movements of the twine carriage (S1, S2), which carries the feeding apparatus (F1, F2), and additionally also of the respective other twine carriage (S1 or S2) in the frame, and in that the driving element (11 or 12) of one twine carriage (S1 or S2) is coupled to the feeding apparatus (F1 or F2) of the other twine carriage in a movement-transmitting manner, and this feeding apparatus (F1 or F2) operates with the sum of the linear movements or respectively movement speeds of the two twine carriages (S1, S2) relative to the frame (4).

2. Roll baler according to claim 1, characterised in that the driving element (11, 12) of each twine carriage (S1, S2) is a link chain, which is displaceably disposed in the frame (4) in the direction of movement of the associated twine carriage by means of the driving arrangement (3, 14, 15), a toothed belt, a toothed rod or an elongated frictional element, and in that the feeding apparatus (F2, F1) of the respective other twine carriage (S2 or S1) has a rotatable driven element (A1, A2), which co-operates in a form- and/or force-locking manner with the driving element (11 or 12) of one twine carriage (S1 or S2).

3. Roll baler according to claim 2, characterised in that the driving element (11, 12) is a link chain or a toothed belt, which forms a loop which is open at one end or an endless loop with two substantially parallel faces which are displaceable in opposite directions, and in that one of the twine carriages (S1, S2) is connected to each face forming a driving element (11, 12).

4. Roll baler according to claim 3, characterised in that the link chain or toothed belt loop (13) is guided onto two guide rollers (14, 15), which are disposed in end regions of the frame (4), at least one of said guide rollers being drivable alternately in one or other direction of rotation, and in that preferably one of the guide rollers is initially springtensioned.

5. Roll baler according to claim 2, characterised in that the driven element (A1, A2) is a pinion (29), which is rotatably mounted in the twine carriage (S1, S2) and can be coupled to at least one feed roller (18) of a pair of feed rollers (18, 19) of the feeding apparatus (F1 or F2) via a shaft (26) and a free-running device (23), and in that the free-running device (23) locks respectively in the return direction of the twine, which direction is opposed to the twine feeding direction.

6. Roll baler according to claim 5, characterised in that the diameter of graduated circle of the pinion (29) is smaller than the external diameter of the feed rollers (18, 19).

7. Roll baler according to claim 5, characterised in that the pinion (29) is mounted on the shaft (26) in an interchangeable manner via an engaging bolt or an engaging sleeve.

8. Roll baler according to claim 5, characterised in that a raisable lock (32, 35) is disposed on the twine carriage (S1, S2) on the side of the link chain or respectively of the toothed belt situated opposite the engagement region of the pinion (29).

9. Roll baler according to claim 1, characterised in that two adjacent raceways (24) for suspended track rollers or sliding elements (25) of the twine carriages (S1) are provided in the frame (4) in an upper frame bar (5), and in that the lower frame bar (7) has external slide paths (35) for sliders (34) disposed on the twine carriages (S1, S2).

10. Roll baler according to at least one of claims 1 to 9, characterised in that the twine carriage (S1, S2) is connected to the link chain (13) via at least one coupling pin (30) disposed in a link of the link chain.

11. Roll baler according to claim 1, characterised in that stationary twine cutting blades (8) are mounted, preferably in a longitudinally displaceable manner, on the lower frame bar (7).

12. Roll baler according to claim 1, characterised in that a twine guiding element (22), preferably a roller, is disposed on the twine carriage (S1, S2) adjacent the feeding apparatus (Fl, F2).

13. Roll baler according to claim 5, characterised in that the freely travelling feed roller (19) is disposed on a pivotal arm (20) of the twine carriage (S1, S2) and pressed against the respective feed roller (18), which is driven in the twine feeding direction, by a spring (21).

14. Roll baler according to claim 5, characterised in that a twine guiding lug (10) is provided on the twine carriage (S1, S2) beneath the feeding apparatus (F1, F2) and substantially on a level with the lower frame bar (7).

## Revendications

1. Presse à balles rondes (R) pour des produits récoltés, avec un boîtier (1) contenant la chambre de compression de balles (P), et avec un dispositif de liage (G) disposé au boîtier (1) au voisinage d'une ouverture d'amenée de fil (2) vers la chambre de compression (P), qui présente un châssis (4) dans lequel sont disposés de manière déplaçable selon un mouvement de va-et-vient deux chariots de fil (S1,S2) en vue d'un déplacement simultané, opposé, linéaire, où chaque chariot de fil (S1,S2) est relié à un élément d'entraînement (11,12) d'une unité d'entraînement pouvant être entraînée dans la direction de déplacement de chariot et présente un dispositif de fourniture de fil (F1, F2) dont le mouvement de fourniture tournant est dérivé d'une manière mécanique du déplacement de chariot de fil linéaire, caractérisée en ce que le mouvement de fourniture du dispositif de fourniture (F1,F2) est dérivé de la somme des déplacements relatifs linéaires et opposés du chariot de fil (S1,S2) portant le dispositif de fourniture (F1,F2) et additionnellement aussi respectivement de l'autre chariot de fil (S2 ou S1) dans le châssis (4), et en ce que l'élément d'entraînement (11 ou 12) d'un chariot de fil (S1 ou S2) est couplé au dispositif de fourniture (F1 ou F2) de l'autre chariot de fil en vue d'une transmission de déplacement, et en ce que ce dispositif de fourniture (F1 ou F2) entraîne avec la somme des déplacements linéaires respectivement vitesses de déplacement des deux chariots de fil (S1,S2) relativement au châssis (4).

2. Presse à balles rondes selon la revendication 1, **caractérisée en ce que** l'élément d'entraînement (11,12) de chaque chariot de fil (S1,S2) est une chaîne à articulations, une courroie dentée, une crémaillère ou un élément de frottement oblong disposé d'une manière déplaçable dans le châssis (4) dans la direction de déplacement du chariot de fil associé au moyen du dispositif d'entraînement (3,14,15), et en ce que le dispositif de fourniture (F2,F1) respectivement de l'autre chariot de fil (S2 ou S1) présente un élément mené (A1,A2) tournant, s'appliquant par concordance des formes ou par force à l'élément d'entraînement (11 ou 12) d'un chariot de fil (S1 ou S2).

3. Presse à balles rondes selon la revendication 2, **caractérisée en ce que** l'élément d'entraînement (11,12) est une chaîne à articulation ou une courroie dentée qui forme une boucle ouverte à une extrémité ou sans fin avec deux brins déplaçables sensiblement parallèlement en sens inverse, et en ce qu'il est relié à chacun des brins formant un élément d'entraînement (11,12) l'un des chariots de fil (S1,S2).

4. Presse à balles rondes selon la revendication 3, **caractérisée en ce que** la boucle de chaîne à articulations ou de courroie dentée (13) est renvoyée sur deux rouleaux de renvoi (14,15) disposés dans des zones d'extrémité du châssis (4) dont au moins un peut être entraîné alternativement dans un sens de rotation ou dans l'autre, et en ce que de préférence l'un des rouleaux de renvoi est précontraint par ressort.

5. Presse à balles rondes selon la revendication 2, **caractérisée en ce que** l'élément mené (A1,A2) est un pignon (29) logé d'une manière rotative dans le chariot de fil (S1,S2) qui peut être accouplé par un arbre (26) et une roue libre (23) au moins avec un rouleau de fourniture (18) d'une paire de rouleaux de fourniture (18,19) du dispositif de fourniture (F1 ou F2), et en ce que la roue libre (23) bloque respectivement dans la direction de traction en arrière du fil opposée à la direction de fourniture de fil.

6. Presse à balles rondes selon la revendication 5, **caractérisée en ce que** le diamètre de cercle partiel du pignon (29) est plus petit que le diamètre extérieur des rouleaux de fourniture (18,19).

7. Presse à balles rondes selon la revendication 5, **caractérisée en ce que** le pignon (29) est retenu d'une manière échangeable par un boulon ou un manchon d'entraînement sur l'arbre (26).

8. Presse à balles rondes selon la revendication 5, **caractérisée en ce qu'**il est disposé au chariot de fil (S1,S2), au côté de la chaîne à articulations respectivement de la courroie dentée opposé à la zone d'engagement du pignon (29), un blocage de sortie (32,35).

9. Presse à balles rondes selon la revendication 1, **caractérisée en ce que** sont prévus dans le châssis (4) dans un longeron de châssis supérieur (5) deux chemins de roulement avoisinants (24) pour des rouleaux accrochés ou éléments de glissement (25) des chariots de fil (S1), et en ce que le longeron de châssis inférieur (7) présente des chemins de glissement (35) au côté extérieur pour des éléments de glissement (34) disposés aux chariots de fil (S1,S2).

10. Presse à balles rondes selon au moins l'une des revendications 1 à 9, **caractérisée en ce que** le chariot de fil (S1,S2) est relié par au moins une tige d'accouplement (30) disposée dans une articulation de la chaîne à articulations, à la chaîne à articulations (13).

11. Presse à balles rondes selon la revendication 1, **caractérisée en ce que** des lames de coupe de fil stationnaires (8) sont disposées, de préférence d'une manière ajustable en longueur, au longeron de châssis inférieur (7).

12. Presse à balles rondes selon la revendication 1, **caractérisé en ce qu**'il est disposé au chariot de fil (S1,S2), au voisinage du dispositif de fourniture (F1,F2), un élément de renvoi de fil (22), de préférence un rouleau.

13. Presse à balles rondes selon la revendication 5, **caractérisée en ce que** le rouleau de fourniture (19) tournant librement est disposé à un bras de pivotement (20) du chariot de fil (S1,S2) et est appliqué par un ressort (21) contre le rouleau de fourniture (18) entraîné respectivement dans la direction de fourniture de fil.

14. Presse à balles rondes selon la revendication 5, **caractérisée en ce qu**'il est prévu au chariot de fil (S1,S2) en dessous du dispositif de fourniture (F1,F2) et à peu près à la hauteur du longeron de châssis inférieur (7), un oeillet de guidage de fil (10).
